# EUROPÄISCHE PATENTANMELDUNG

(11) **EP 2 169 290 A2**
(43) Veröffentlichungstag der Anmeldung: **31.03.2010**
(21) Anmeldenummer: 09168739.2
(22) Anmeldetag: 26.08.2009
(51) Int. Cl.: F16L 9/00, F16L 9/06

(54) **Profilrohr**

(30) Priorität: 26.09.2008 DE 102008049249
(71) Anmelder: Welser Profile GmbH, 59199 Bönen (DE)
(72) Erfinder: Welser, Wolfgang, 3341 Ybbsitz (AT)
(74) Vertreter: Kietzmann, Lutz

(57) **Zusammenfassung**

Die Erfindung betrifft ein Profilrohr für eine Tuchwelle mit einem im Wesentlichen kreisrunden Querschnittsprofil und wenigstens einer sich nach radial innen erstreckenden Längsnut (1).

Erfindungsgemäß besitzt die wenigstens eine Längsnut (1) eine sich nach radial innen aufweitende Querschnittsform, die sich aus zwei kurzen, jeweils schräg nach radial innen verlaufenden geraden Abschnitten und einem weiteren geraden oder kreisbogenförmig entlang einer in Bezug auf die Rohrlängsachse als Mittelpunkt konzentrischen Kreislinie verlaufenden Abschnitt zusammensetzt, wobei die Übergänge der Abschnitte gerundet sind, ferner, dass das Profilrohr im Querschnitt wenigstens einen Rohrwandabschnitt (2) besitzt, der entlang einer Hüllkurve H wellenförmig verläuft.

## Beschreibung

Die Erfindung betrifft ein Profilrohr für eine Tuchwelle mit einem im Wesentlichen kreisrunden Querschnittsprofil und wenigstens einer sich nach radial innen erstreckenden Längsnut.

Tuchwellen oder Nutrohre werden beispielsweise zum Aufwickeln von Sonnenschutztüchern bei der Herstellung von Markisen sowie sonstigen eine Welle umfassenden Sonnenschutzanlagen verwendet. Zur Lagerung der Welle sind an beiden Enden Adapter vorgesehen, die in bauseits vorgehaltene Lager eingesetzt werden. Der Antrieb der Welle kann manuell, beispielsweise über eine Kurbelvorrichtung, oder über einen an die Welle angeschlossenen Elektromotor erfolgen. Derzeit auf dem Markt erhältliche Tuchwellen oder Nutrohre weisen ein Querschnittsprofil mit einer sich nach radial innen erstreckenden Nut auf. Die Nut dient der Aufnahme einer Tuchkante eines Sonnenschutztuches. Die Querschnittsform der Nut ist in der Regel kreisförmig oder zumindest teilkreisförmig ausgebildet. Darüber hinaus sind Nutrohre in unterschiedlichen Längen und mit unterschiedlichen Durchmessern bekannt.

Aufgabe der vorliegenden Erfindung ist es, ein Profilrohr für eine Tuchwelle weiterzubilden. Insbesondere soll die Biegesteifigkeit des Profilrohres erhöht und damit ein besseres dynamisches Durchbiegeverhalten erreicht werden.

Zur Lösung der Aufgabe wird ein Profilrohr mit den Merkmalen des Anspruchs 1 vorgeschlagen. Bevorzugte Weiterbildungen der Erfindung werden in den Unteransprüchen beschrieben.

Das vorgeschlagene Profilrohr weist wenigstens eine sich nach radial innen erstreckende Längsnut auf, die erfindungsgemäß eine sich nach radial innen aufweitende Querschnittsform besitzt. Dabei setzt sich die Querschnittsform der Längsnut aus zwei kurzen, jeweils schräg nach radial innen verlaufenden geraden Abschnitten und einem weiteren geraden oder kreisbogenförmig entlang einer in Bezug auf die Rohrlängsachse als Mittelpunkt konzentrischen Kreislinie verlaufenden Abschnitt zusammen, wobei die Übergänge der Abschnitte gerundet sind. Das Profilrohr zeichnet sich weiterhin dadurch aus, dass es im Querschnitt wenigstens einen Rohrwandabschnitt besitzt, der entlang einer Hüllkurve H wellenförmig verläuft. Die im Querschnitt wellenförmig verlaufenden Rohrwandabschnitte bilden über die Rohrlänge Längsnuten aus, die eine erhöhte Biegesteifigkeit des Profilrohres bewirken. Eine erhöhte Biegesteifigkeit des Profilrohres wiederum geht mit einem verbesserten Wickelverhalten des Tuches und ruhigeren Laufeigenschaften bei Verwendung als Tuchwelle einher. Das mit wenigstens einem im Querschnitt wellenförmig verlaufenden Rohrwandabschnitt versehene Profilrohr erweist sich somit gegenüber den aus dem Stand der Technik als Tuchwelle verwendeten Profilrohren als überlegen.

Nach einer bevorzugten Ausführungsform weist das Profilrohr im Querschnitt umfangsseitig gleichmäßig verteilt drei Längsnuten auf. Das Querschnittsprofil ist somit rotationssymmetrisch um einen Winkel α = 120° ausgebildet. Die Ausbildung mehrerer Längsnuten trägt ebenfalls zu einer höheren Biegesteifigkeit des Profilrohres bei, so dass der Einsatz eines solchen Profilrohres für eine Tuchwelle ebenfalls in einem verbesserten Wickelverhalten des Tuches sowie ruhigen Laufeigenschaften zum Ausdruck kommt. Zur Aufnahme der Tuchkante kann jede der Längsnuten herangezogen werden, da sie im Querschnitt identisch ausgebildet sind. Alternativ können im Querschnitt umfangsseitig gleichmäßig verteilt auch zwei Längsnuten oder mehr als drei Längsnuten angeordnet sein. Beispielsweise können jeweils um einen Rotationswinkel α = 90° auch vier Längsnuten umfangsseitig gleichmäßig verteilt sein.

Weiterhin vorzugsweise ist im Querschnitt ein wellenförmig verlaufender Rohrwandabschnitt jeweils zwischen zwei Längsnuten angeordnet. Somit weist das Profilrohr im Querschnitt abwechselnd Nutbereiche sowie wellenförmig verlaufende Rohrwandabschnitte auf. Dabei kann sich jeweils beidseitig einer Längsnut ein kreisbogenförmig und konzentrisch zur Hüllkurve H verlaufender Rohrwandabschnitt anschließen, der gegenüber der Hüllkurve H zurückgesetzt ist und in den wellenförmig verlaufenden Rohrwandabschnitt übergeht. Die jeweils kreisbogenförmig verlaufenden und gegenüber der Hüllkurve H zurückgesetzten Rohrwandabschnitte bilden Anlageflächen für eine im Randbereich verstärkte Tuchkante aus. Zur Verstärkung kann die Tuchkante beispielsweise einen Saum oder Umschlag aufweisen, so dass hier das Tuch zumindest doppelt liegt. Indem der kreisbogenförmig verlaufende Abschnitt gegenüber der Hüllkurve H zurückgesetzt ist, wird ein Aufnahmeraum für den Saum oder den Umschlag im Bereich der Tuchkante geschaffen, so dass weder Saum noch Umschlag auftragen und dabei das Wickelverhalten des Tuches beeinträchtigen.

Die Abmessungen des Profilrohrs können variieren und hängen insbesondere von dem jeweils vorgesehenen Verwendungszweck des Profilrohres ab. Bei der Verwendung als Tuchwelle haben insbesondere die vorhandene Einbausituation sowie das als Sonnenschutz verwendete Tuch Einfluss auf die Profilrohrabmessungen. Bevorzugt weist das Profilrohr eine den Rohraußendurchmesser umhüllende Hüllkurve H mit einem Durchmesser D1 zwischen 75mm und 100mm auf. Weiterhin bevorzugt wird ein Hüllkurvendurchmesser D1 zwischen 81mm und 82mm. Bei einem derartigen Durchmesser lässt sich beispielsweise ein Tuch gut aufwickeln, ohne dass die Wicklung zu einer Beschädigung oder optischen Beeinträchtigung des Tuches führt.

Der lichte Rohrinnendurchmesser D2 liegt vorteilhafterweise zwischen 55m und 75mm. Vorzugsweise beträgt er 61mm. Das Maß D2 gibt den Durchmesser eines Kreises an, der im Querschnitt wenigstens drei Berührungspunkte mit dem Profilrohr aufweist, dieses jedoch nicht schneidet. Bei einem drei Längsnuten aufweisenden Profilrohr liegt der Kreis jeweils an der radial innenliegenden Außenseite der Längsnuten an.

Ein weiterer Kreis kann im Querschnitt innen an den wenigstens einen wellenförmig verlaufenden Rohrabschnitt angelegt werden. Dieser Kreis weist bevorzugt einen Durchmesser D3 zwischen 65mm und 90mm auf. Weiterhin vorzugsweise beträgt der Durchmesser D3 etwa 77mm. Die jeweils durch die Durchmesser D1, D2 und D3 angegebenen Kreise liegen vorzugsweise konzentrisch in Bezug auf die Rohrlängsachse. Die Abstände der Kreise zueinander sind dann umlaufend gleich bleibend.

Die Außenabmessungen des Profilrohres werden dort wo sich ein wellenförmig und ein kreisbogenförmig verlaufender Rohrwandabschnitt gegenüberliegen durch die Rohrquerschnittsbreite B bestimmt. Dieses entspricht im Wesentlichen dem Durchmesser D1 der Hüllkurve H abzüglich einer Wandstärke S. Vorzugsweise liegt die Breite B zwischen 80mm und 81mm.

Die wenigstens eine Längsnut des vorgeschlagenen Profilrohres weist ebenfalls eine bestimmte Nutgeometrie auf. Nach einem bevorzugten Ausführungsbeispiel liegt die maximale Nutbreite NB1 der Längsnut zwischen 8mm und 15mm. Vorzugsweise beträgt sie 11mm.

Indem die Längsnut eine sich nach radial innen aufweitende Querschnittsform besitzt, wird die Nutgeometrie ferner durch eine minimale Nutbreite NB2 bestimmt, die bevorzugt zwischen 2mm und 8mm liegt, vorteilhafterweise beträgt sie 5mm. Eine derart gewählte Nutbreite gewährleistet, dass hierüber auch eine verstärkte und/oder gegebenenfalls doppelt oder mehrfach liegende Tuchkante leicht eingefädelt werden kann.

Die Nutgeometrie wird ferner durch die Rundungsradien zwischen den jeweils schräg nach radial innen verlaufenden geraden Nutwandabschnitten und dem dazwischen angeordneten geraden oder kreisbogenförmig verlaufenden Nutwandabschnitt bestimmt. Bevorzugt liegt dieser Rundungsradius R1 zwischen 1mm und 5mm, vorzugsweise beträgt er 2,5mm.

Auch im Übergang zu den kreisbogenförmig und gegenüber der Hüllkurve H zurückgesetzt verlaufenden Rohrwandabschnitten ist die Querschnittsform der Längsnut gerundet. Die Rundung weist einen Rundungsradius R2 auf, der zwischen 0,5mm und 3mm liegt. Vorzugsweise beträgt er 1,5mm.

Ein weiteres relevantes Maß stellt die Wandstärke S des Profilrohres dar. Bei dem vorgeschlagenen Profilrohr liegt die Wandstärke S zwischen 0,5mm und 3mm. Bevorzugt wird eine Wandstärke S von 1mm oder 1,2mm. Aufgrund der Anordnung von wenigstens einer Längsnut sowie im Querschnitt wellenförmig verlaufende Wandabschnitte weist ein Profilrohr mit einer derart gewählten Wandstärke bereits ein sehr gutes dynamisches Biegeverhalten auf. Insbesondere erweist es sich als hinreichend biegesteif, um ein gutes Wickelverhalten des Tuches bei Verwendung als Tuchwelle zu gewährleisten.

Auch die im Querschnitt wellenförmig verlaufenden Rohrwandabschnitte sind maßlich bestimmbar. Der Rundungsradius des Rohrwandabschnittes, der ein Wellental definiert, liegt vorzugsweise zwischen 0,5mm und 2,5mm. Gemäß einem bevorzugten Ausführungsbeispiel beträgt er 1mm oder 1,25mm.

Der Rundungsradius R4 des Rohrwandabschnittes, der einen Wellenberg definiert, liegt bevorzugt zwischen 2mm und 5,5mm. Weiterhin vorzugsweise beträgt er 3,75mm oder 4mm. Dabei geht die Rundung mit dem Rundungsradius R4 vorzugsweise direkt in die Rundung mit dem Rundungsradius R3 über. Insoweit sind auch die Abstände zwischen Wellenberg und Wellental festgelegt. Die Abstände können auch durch das Winkelmaß β angegeben werden. Wobei der Winkel β den von zwei Radialen umschlossenen Winkel wiedergibt, die jeweils durch den Scheitelpunkt zweier benachbarter Wellenberge verlaufen. Der Winkel β liegt zwischen 6° und 12°, vorzugsweise beträgt er etwa 9°.

Insbesondere bei der Verwendung des Profilrohres als Tuchwelle hat es sich zudem als vorteilhaft erwiesen, wenn die Oberfläche des Profilrohres beschichtet ist. Zum einen wird das Profilrohr in der Regel im Außenbereich angeordnet sein, so dass es Wind und Wetter ausgesetzt ist. Zum anderen wird die Oberfläche des Profilrohres durch Auf- bzw. Abwickeln des Tuches besonders stark beansprucht. Dabei gilt es unter anderem auch, Beschädigungen und/oder optische Beeinträchtigungen des Tuches zu vermeiden. Dementsprechend sollte die Oberfläche des Profilrohres gute Gleiteigenschaften aufweisen, um beispielsweise Rückstände durch Abrieb zu vermeiden. Bevorzugt weist daher das Profilrohr eine Oberflächenbeschichtung aus einer Zink-Magnesium (ZnMg)-Legierung auf. Weiterhin bevorzugt wird eine Sendzimierverzinkung oder eine elektrolytische Verzinkung. Vorteilhafterweise kann auch gleich ein Aluzinkmaterial zur Herstellung eines erfindungsgemäßen Profilrohres gewählt werden.

Die Herstellung des Profilrohres erfolgt bevorzugt in einem kontinuierlichen Biegeverfahren, vorzugsweise durch Kaltwalzen und/oder Walzprofilieren. Hierbei wird Bandmaterial aus Blech durch den Einsatz formgebender Rollenwerkzeuge schrittweise zum gewünschten Endquerschnitt umgeformt, wobei die Materialstärke des Bandmaterial erhalten bleibt. Nach dem Umformen werden die Längskanten des Profilrohres verschweißt. Hierzu eignen sich insbesondere Hochfrequenz- oder Laserschweißverfahren. Gegebenenfalls muss die Schweißnaht nachbearbeitet, insbesondere geglättet und/oder nachverzinkt werden.

Ferner wird vorliegend die Verwendung eines erfindungsgemäßen Profilrohres für eine Tuchwelle einer Markise oder einer sonstigen Sonnenschutzanlage beansprucht. Bei dieser Verwendung kommen die vorstehend beschriebenen Vorteile des Profilrohres besonders gut zum Tragen.

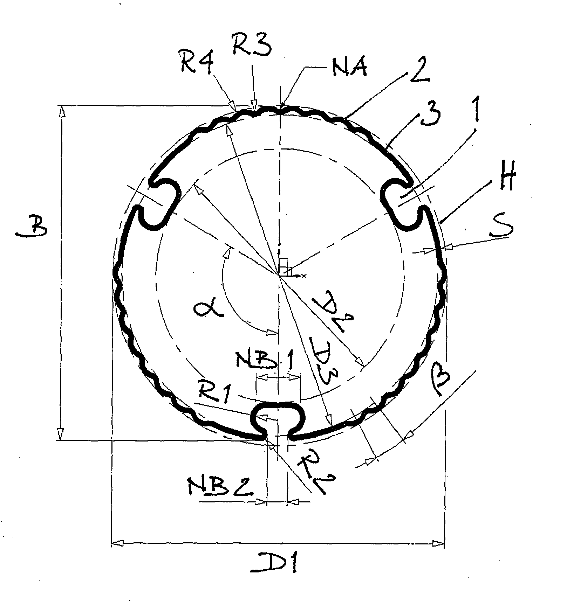

Eine bevorzugte Ausführungsform der Erfindung nachfolgend anhand der einzigen Zeichnung näher beschrieben. Sie zeigt das Querschnittsprofil eines erfindungsgemäßen Profilrohres.

Dem dargestellten Querschnittsprofil sind drei Längsnuten 1 zu entnehmen, die äquidistant, d.h. umfangsseitig gleichmäßig verteilt, jeweils um 120° versetzt zueinander angeordnet sind. Das Querschnittsprofil ist somit rotationssymmetrisch. Die Nutmittelachsen NA umschließen jeweils einen Winkel α = 120°. Die Längsnuten 1 sind gleich ausgebildet. Sie weisen jeweils eine Querschnittsform auf, die zwei kurze, jeweils schräg nach radial innen verlaufende gerade Abschnitte, sich hieran anschließende Rundungen und eine die Rundungen verbindende kreisbogenförmig verlaufende Nutbasis umfasst. Auf diese Weise ergibt sich eine nach radial innen aufweitende Querschnittsform. Die Nutgeometrie ist derart gewählt, dass die maximale Nutbreite NB 1 11 mm und die minimale Nutbreite NB2 5mm beträgt. Der Rundungsradius R1 der Rundungen, die die Nutbasis mit den jeweils schräg nach radial innen verlaufenden geraden Abschnitten verbindet, beträgt vorliegend 2,5mm. Auch der Übergangsbereich der Nut zu den außenliegenden Rohrwandabschnitten des Profilrohres sind gerundet. Ihr Rundungsradius R2 beträgt 1,5mm.

An die durch den Rundungsradius R2 definierten Rundungen schließt sich zunächst ein kreisbogenförmig und konzentrisch zur Hüllkurve H verlaufender Rohrwandabschnitt 3 an, der jedoch gegenüber der Hüllkurve H radial nach innen versetzt ist. Der kreisbogenförmig verlaufende Rohrwandabschnitt geht in einen wellenförmig verlaufenden Rohrwandabschnitt 2 über, beginnend mit einem Wellenberg mit einem Rundungsradius R4 von 4mm und fortfahrend mit einem Wellental mit einem Rundungsradius R3 von 1mm.

Jede Längsnut 1 wird von zunächst kreisbogenförmig verlaufenden Rohrwandabschnitten 3 eingefasst, wobei der radiale Abstand eines solchen Rohrwandabschnittes zur Hüllkurve H die Aufnahme einer verstärkten Tuchkante ermöglicht. Die Hüllkurve H weist vorliegend einen Durchmesser D1 von 81,8mm.

Zwischen jeweils zwei Längsnuten 1, d.h. zwischen den hieran anschließenden kreisbogenförmig verlaufenden Rohrwandabschnitten 3 sind jeweils die wellenförmig verlaufenden Rohrwandabschnitte 2 angeordnet. Ein innenseitig an den wellenförmig verlaufenden Rohrwandabschnitt angelegter Kreis weist einen Durchmesser D3 auf, der vorliegend 77,3mm beträgt. Der lichte Rohrinnendurchmesser D2 wird jedoch durch den Durchmesser eines Kreises bestimmt, der rohrinnenseitig an den Längsnuten 1 anliegt. Der Durchmesser D2 beträgt vorliegend 61mm.

Das im Querschnitt dargestellte Profilrohr wurde durch Walzprofilieren bei Raumtemperatur hergestellt. Das Ausgangsmaterial stellte ein 1,25mm starkes Blechband dar. Da die Materialstärke bei Einsatz eines solchen Verfahrens erhalten bleibt, beträgt die Rohrwandstärke S des fertigen Profilrohres ebenfalls 1,25mm. Um ein geschlossenes Profil zu erhalten, wurde das Rohr entlang der Längskanten nach dem Umformen verschweißt. Das dargestellte Profilrohr weist zudem eine Oberflächenbeschichtung aus einer Zink-Magnesium-Legierung auf.

### Bezugszeichenliste

- 1: Längsnut
- 2: wellenförmig verlaufender Rohrwandabschnitt
- 3: kreisbogenförmig verlaufender Rohrwandabschnitt

- H: Hüllkurve
- D1: Durchmesser der Hüllkurve H
- D2: lichter Rohrinnendurchmesser
- D3: Durchmesser eines innen an den wenigstens einen wellenförmig verlaufenden Rohrwandabschnitt anliegenden Kreises
- B: Rohrquerschnittsbreite
- S: Rohrwandstärke
- NB 1: maximale Nutbreite
- NB 2: minimale Nutbreite
- NA: Nutmittelachse
- R1: erster Rundungsradius
- R2: zweiter Rundungsradius
- R3: dritter Rundungsradius
- R4: vierter Rundungsradius

## Patentansprüche

1. Profilrohr für eine Tuchwelle mit einem im Wesentlichen kreisrunden Querschnittsprofil und wenigstens einer sich nach radial innen erstreckenden Längsnut (1),
**dadurch gekennzeichnet, dass** die wenigstens eine Längsnut (1) eine sich nach radial innen aufweitende Querschnittsform besitzt, die sich aus zwei kurzen, jeweils schräg nach radial innen verlaufenden geraden Abschnitten und einem weiteren geraden oder kreisbogenförmig entlang einer in Bezug auf die Rohrlängsachse als Mittelpunkt konzentrischen Kreislinie verlaufenden Abschnitt zusammensetzt, wobei die Übergänge der Abschnitte gerundet sind, ferner, dass das Profilrohr im Querschnitt wenigstens einen Rohrwandabschnitt (2) besitzt, der entlang einer Hüllkurve H wellenförmig verläuft.

2. Profilrohr nach Anspruch 1,
**dadurch gekennzeichnet, dass** im Querschnitt umfangseitig gleichmäßig verteilt drei Längsnuten (1) angeordnet sind, so dass das Querschnittsprofil rotationssymmetrisch um einen Winkel α = 120° ausgebildet ist.

3. Profilrohr nach Anspruch 1 oder 2,
**dadurch gekennzeichnet, dass** im Querschnitt ein wellenförmig verlaufender Rohrwandabschnitt (2) jeweils zwischen zwei Längsnuten (1) angeordnet ist, wobei vorzugsweise sich jeweils beidseitig einer Längsnut (1) ein kreisbogenförmig und konzentrisch zur Hüllkurve H verlaufender Rohrwandabschnitt (3) anschließt, der gegenüber der Hüllkurve H zurückgesetzt ist und in den wellenförmig verlaufenden Rohrwandabschnitt (2) übergeht.

4. Profilrohr nach einem der vorhergehenden Ansprüche,
**dadurch gekennzeichnet, dass** der Durchmesser D1 der Hüllkurve H zwischen 75 mm und 100 mm, vorzugsweise zwischen 81 mm und 82 mm liegt.

5. Profilrohr nach einem der vorhergehenden Ansprüche,
**dadurch gekennzeichnet, dass** der lichte Rohrinnendurchmesser D2 zwischen 55 mm und 75 mm, vorzugsweise 61 mm beträgt.

6. Profilrohr nach einem der vorhergehenden Ansprüche,
**dadurch gekennzeichnet, dass** der Durchmesser D3 eines innen an dem wellenförmig verlaufenden Rohrwandabschnitt (2) anliegenden Kreises zwischen 65 mm und 90 mm, vorzugsweise etwa 77 mm beträgt.

7. Profilrohr nach einem der vorhergehenden Ansprüche,
**dadurch gekennzeichnet, dass** die maximale Nutbreite NB 1 der Längsnut (1) zwischen 8 mm und 15 mm, vorzugsweise 11 mm beträgt.

8. Profilrohr nach einem der vorhergehenden Ansprüche,
**dadurch gekennzeichnet, dass** die minimale Nutbreite NB 2 der Längsnut (1) zwischen 2 mm und 8 mm, vorzugsweise 5 mm beträgt.

9. Profilrohr nach einem der vorhergehenden Ansprüche,
**dadurch gekennzeichnet, dass** der Rundungsradius R1 der Längsnut (1) zwischen 1 mm und 5 mm, vorzugsweise 2,5 mm beträgt.

10. Profilrohr nach einem der vorhergehenden Ansprüche,
**dadurch gekennzeichnet, dass** der Rundungsradius R2 der Längsnut (1) zwischen 0,5 mm und 3 mm, vorzugsweise 1,5 mm beträgt.

11. Profilrohr nach einem der vorhergehenden Ansprüche,
**dadurch gekennzeichnet, dass** die Wandstärke S zwischen 0,5 mm und 3 mm, vorzugsweise 1 mm oder 1,25 mm beträgt.

12. Profilrohr nach einem der vorhergehenden Ansprüche,
**dadurch gekennzeichnet, dass** der Rundungsradius R3, der ein Wellental des wellenförmig verlaufenden Rohrwandabschnittes (2) definiert, zwischen 0,5 mm und 2,5 mm, vorzugsweise 1 mm oder 1,25 mm beträgt.

13. Profilrohr nach einem der vorhergehenden Ansprüche,
**dadurch gekennzeichnet, dass** der Rundungsradius R4, der einen Wellenberg des wellenförmig verlaufenden Rohrwandabschnittes (2) definiert, zwischen 2 mm und 5,5 mm, vorzugsweise 3,75 mm oder 4 mm beträgt.

14. Profilrohr nach einem der vorhergehenden Ansprüche,
**dadurch gekennzeichnet, dass** es eine Oberflächenbeschichtung besitzt, wobei die Oberflächenbeschichtung vorzugsweise aus Zink-Magnesium (ZnMg) besteht oder wobei das Profil sendzimierverzinkt oder elektrolytisch verzinkt ist.

15. Profilrohr nach einem der vorhergehenden Ansprüche,
**dadurch gekennzeichnet, dass** es durch Kaltwalzen und/oder Walzprofilieren, vorzugsweise in einem kontinuierlichen Biegeverfahren, hergestellt und verschweißt ist.

16. Verwendung eines Profilrohres nach einem der vorhergehenden Ansprüche für eine Tuchwelle einer Markise oder einer sonstigen Sonnenschutzanlage
